(19) Europäisches Patentamt
European Patent Office
Office européen des brevets

(11) **EP 2 418 645 A1**

(12) **EUROPEAN PATENT APPLICATION**
published in accordance with Art. 153(4) EPC

(43) Date of publication:
**15.02.2012 Bulletin 2012/07**

(21) Application number: **10761411.7**

(22) Date of filing: **05.04.2010**

(51) Int Cl.:
**G11B 7/24** (2006.01)          **G11B 7/254** (2006.01)
**G11B 7/257** (2006.01)          **G11B 7/26** (2006.01)

(86) International application number:
**PCT/JP2010/002474**

(87) International publication number:
**WO 2010/116707 (14.10.2010 Gazette 2010/41)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **09.04.2009   JP 2009094792
15.07.2009   JP 2009166535**

(71) Applicant: **Panasonic Corporation
Kadoma-shi
Osaka 571-8501 (JP)**

(72) Inventors:
• **HISADA, Kazuya**
  **Osaka-shi
  Osaka 540-6207 (JP)**

• **OHNO, Eiji**
  **Osaka-shi
  Osaka 540-6207 (JP)**
• **BIRUKAWA, Masahiro**
  **Osaka-shi
  Osaka 540-6207 (JP)**

(74) Representative: **Schwabe - Sandmair - Marx
Patentanwälte
Stuntzstraße 16
81677 München (DE)**

(54) **INFORMATION RECORDING MEDIUM AND METHOD FOR MANUFACTURING INFORMATION RECORDING MEDIUM**

(57)    An information recording medium includes a substrate, and particle portions arranged in isolated relation on the substrate and each including an information recording material. A width of each of the particle portions in an information recording direction is not more than 30 nm. The information recording medium further includes pillars arranged in isolated relation on the substrate. Each of the particle portions is formed of the information recording material formed on each of the pillars. A width of each of the pillars in the information recording direction is not more than 30 nm, and a height of each of the pillars is larger than a thickness of the information recording material.

FIG.1

EP 2 418 645 A1

**Description**

Technical Field

The present invention relates to an information recording medium capable of achieving high-density recording and a method for manufacturing the information recording medium.

Background Art

In the field of information recording, researches on various optical information recording have been promoted. As current optical disks, a CD, a DVD, a Blu-ray disk, and the like are widely used. With further advancement of the information recording field, higher-density optical memories are being in demand. In the CD, DVD, and Blu-ray disks, respective shortest mark lengths have been reduced to 0.83 $\mu$m, 0.40 $\mu$m, and 0.15 $\mu$m to thereby achieve higher densities. However, it is considered that, in current optical recording methods, further significant size reductions in recording marks are difficult due to the diffraction limit of light.

In recent years, an optical recording method using near-field light has drawn significant attention as a technology which breaks through the diffraction limit. The near-field light mentioned above indicates light which is generated, when light is incident on an aperture, a fine particle, or the like of a size of not more than the wavelength of light, in a form localized in closest proximity thereto. A spot diameter formed by the near-field light does not depend on the wavelength of the incident light, but is determined by the size of the aperture, fine particle, or the like on which the near-field light is incident.

Conventionally, a method which causes light to be incident on a sharpened fiber probe or the like to generate near-field light in a minute aperture provided in the tip thereof has been adopted in most cases. However, the method has the problem of a low use efficiency of the light relative to the incident light. In recent years, as a technique which greatly increases the light use efficiency, a near-field light generating element using surface plasmon resonance of metal has been proposed (e.g., Patent Document 1).

The technique illuminates a minute metal film with light at an appropriate wavelength to induce surface plasmon resonance and generate near-field light in the vicinity of the metal film, thereby achieving recording/reproduction.

Besides, to improve a recording density, many a method has also been proposed which forms a pattern on a substrate in advance to thereby achieve stable recording/reproduction (e.g., Patent Documents 2 and 3).

By using these and recording more minute recording marks, it is possible to implement a higher-density and higher-capacity optical memory.

In particular, in each of rewritable CD, DVD, and Blu-ray disks, a phase-change recording material is widely used as a recording film (e.g., Patent Document 4). In this case, the phase-change recording material is heated/rapidly cooled using an optical spot to be amorphized or heated/gradually cooled to be crystallized and, through such a process, marks are recorded. So far, active research and development has been conducted widely on the phase-change recording material. The limit of a density increase in a current optical recording medium is not attributable to a phase-change recording material, but is determined by the diffraction limit (size of a formed optical spot) of a current optical recording method. Accordingly, if a smaller optical spot can be formed, the phase-change recording material still has a high latent potential as a material for high-density recording. Therefore, the phase-change recording material can be considered to be a promising material in future higher-density optical information recording.

However, when recording marks are to be written in a phase-change recording material using the near-field light resulting from surface plasmon resonance described above and using an optical spot of a size of not more than the diffraction limit, if the optical spot is reduced to a size of not more than 30 nm, the following problem has occurred. That is, to crystallize the phase-change recording material, the temperature thereof is increased with the optical spot and thermal diffusion occurs therein so that a problem arises such as recording marks each having a size of not less than 30 nm.

On the other hand, even when small marks can be written in an indiscrete and continuous phase-change thin film, at a recording density of not less than several hundreds of gigabits per square inch, the recording marks become unstable due to thermal fluctuation to result in a problem such as extremely large noise.

Note that, as described previously, it has been proposed to provide a pattern on a substrate in advance and thereby suppress thermal diffusion (e.g., Patent Documents 2 and 3). However, in each of the methods described so far, it is extremely difficult to produce a stable pattern.

     Patent Document 1: Japanese Patent Application Laid-open No. 2003-114184
     Patent Document 2: Japanese Patent No. 2584122
     Patent Document 3: Japanese Patent No. 3793040
     Patent Document 4: Japanese Patent No. 2574325

Non-Patent Document 1: Proc. Roy. Soc. Lond. A., 318 231

Summary of the Invention

An object of the present invention is to provide an information recording medium capable of achieving stable high-density recording free from thermal diffusion and a method for manufacturing the information recording medium.

To attain the foregoing object, an information recording medium according to an aspect of the present invention includes: a substrate; and particle portions arranged in isolated relation on the substrate and each including an information recording material, wherein a width of each of the particle portions in an information recording direction is not more than 30 nm.

In accordance with the arrangement described above, the particle portions are arranged in isolated relation on the substrate. This allows localized heating of each of the particle portions and allows stable recording free from thermal diffusion to be performed. In addition, the width of each of the particle portions in an information recording direction is not more than 30 nm and high-density recording using the particle portions as minimum units can be performed. Therefore, it is possible to obtain a high-reliability and high-density information recording medium.

A method for manufacturing an information recording medium according to an aspect of the present invention is a method for manufacturing an information recording medium including a substrate, and particle portions arranged in isolated relation on the substrate and each including an information recording material, a width of each of the particle portions in an information recording direction being not more than 30 nm, the method including: a pillar formation step of arranging, on the substrate, pillars each having a width of not more than 30 nm in the information recording direction into isolated relation; and a deposition step of depositing the information recording material over the substrate formed with the pillars to thereby form, on each of the pillars, the information recording material in an isolated state.

In accordance with the arrangement described above, the pillars are formed first into isolated relation on the substrate. Then, by forming the information recording material on each of the pillars, the information recording material in the isolated state is formed. Here, since the width of each of the pillars in the information recording direction is set not more than 30 nm, the width of the information recording material (particle portion) on each of the pillars in the information recording direction can be set not more than 30 nm. As a result, even when the information recording material is uniformly deposited on the substrate by the deposition step using, e.g., sputtering, vapor deposition, or the like, the isolated information recording materials (particle portions) corresponding to the pattern of the pillars can be easily arranged, which results in easy deposition. As a result, it is possible to easily manufacture a high-reliability information recording medium capable of achieving high-density recording using the pillars as minimum units.

Other objects, features, and excellent aspects of the present invention will be sufficiently understood based on the following description. The advantages of the present invention will become apparent from the following description taken with the accompanying drawings.

Brief Description of the Drawings

[Fig. 1] Fig. 1 is an enlarged schematic main-portion perspective view showing an example of an information recording medium according to an embodiment of the present invention.

[Fig. 2] Fig. 2 is an enlarged schematic main-portion perspective view showing an example of a method of recording/reproduction to/from the information recording medium according to the embodiment of the present invention.

[Fig. 3] Fig. 3 is an illustrative view showing an example of a method of recording/reproduction to/from a conventional information recording medium.

[Fig. 4] Fig. 4A is an enlarged main-portion perspective view showing an example of a substrate on which pillars are arranged in the information recording medium according to the embodiment of the present invention, and Fig. 4B is a schematic cross-sectional view showing an example of a cross section of the information recording medium according to the embodiment of the present invention.

[Fig. 5] Fig. 5 is a schematic cross-sectional view showing an example of a method for manufacturing the information recording medium according to the embodiment of the present invention.

[Fig. 6] Fig. 6 is a schematic cross-sectional view showing an example of the method for manufacturing the information recording medium according to the embodiment of the present invention.

[Fig. 7] Fig. 7A is a schematic cross-sectional view showing an example of the cross section of the information recording medium according to the embodiment of the present invention, and Fig. 7B is a schematic cross-sectional view showing an example of the cross section of the information recording medium according to the embodiment of the present invention.

[Fig. 8] Fig. 8A is a schematic illustrative view showing an example of the method for manufacturing the information recording medium according to the embodiment of the present invention, Fig. 8B is an illustrative view showing an example of a phase-change recording material formed on the pillar of the information recording medium according to the embodiment of the present invention, and Fig. 8C is an illustrative view showing another example of the phase-change recording material formed on the pillar of the information recording medium according to the embodiment of the present invention.

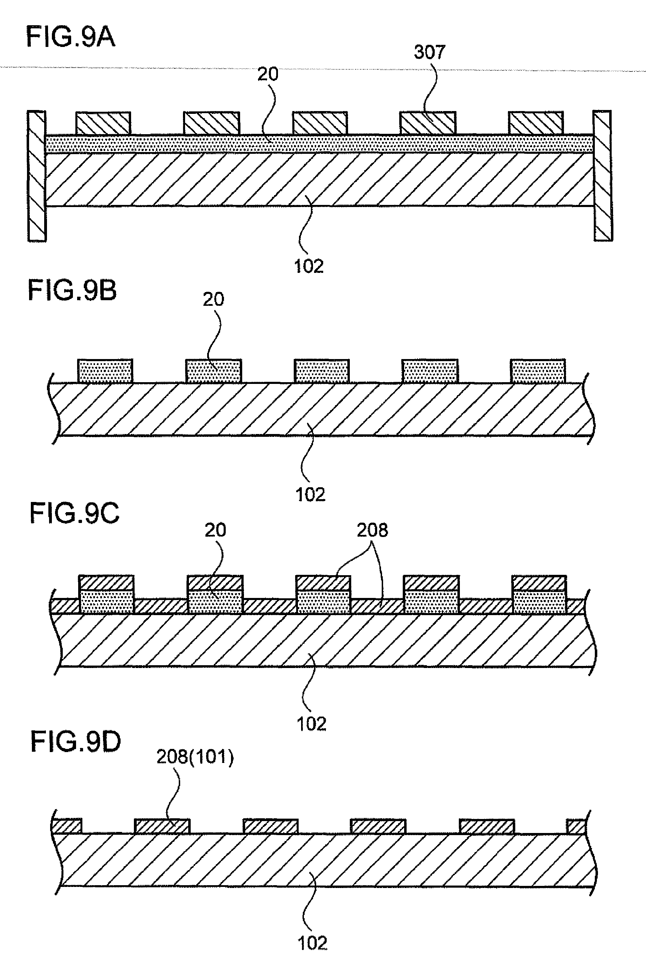

[Fig. 9] Fig. 9A is a schematic illustrative view showing an example of the method for manufacturing the information recording medium according to the embodiment of the present invention, Fig. 9B is a schematic illustrative view showing the example of the method for manufacturing the information recording medium according to the embodiment of the present invention, Fig. 9C is a schematic illustrative view showing the example of the method for manufacturing the information recording medium according to the embodiment of the present invention, and Fig. 9D is a schematic illustrative view showing the example of the method for manufacturing the information recording medium according to the embodiment of the present invention.

[Fig. 10] Fig. 10 is an enlarged schematic main-portion perspective view showing an example of the information recording medium according to the embodiment of the present invention.

[Fig. 11] Fig. 11 is a schematic cross-sectional view showing an example of a cross section of a conventional information recording medium.

[Fig. 12] Fig. 12A is an illustrative view showing an example of a phase-change recording material formed on the pillar of the information recording medium, Fig. 12B is an illustrative view showing another example of the phase-change recording material formed on the pillar of the information recording medium, and Fig. 12C is an illustrative view showing still another example of the phase-change recording material formed on the pillar of the information recording medium.

[Fig. 13] Fig. 13A is a cross-sectional view showing an example of a cross section of the pillar resulting from cutting along a plane parallel with the main surface of the substrate in the information recording medium according to the embodiment of the present invention, and Fig. 13B is a cross-sectional view showing another example of the cross section of the pillar resulting from cutting along the plane parallel with the main surface of the substrate in the information recording medium according to the embodiment of the present invention.

[Fig. 14] Fig. 14 is a cross-sectional view showing an example of a cross section of the pillar resulting from cutting along a plane perpendicular to the main surface of the substrate in the information recording medium according to the embodiment of the present invention.

[Fig. 15] Fig. 15A is an illustrative view for illustrating an angle of each of the pillars in the information recording medium, Fig. 15B is a schematic cross-sectional view showing an example of a relationship between the angle of the pillar and the shape of a phase-change recording material on the pillar in the information recording medium, and Fig. 15C is a schematic cross-sectional view showing another example of the relationship between the angle of the pillar and the shape of the phase-change recording material on the pillar in the information recording medium.

Best Mode for Carrying Out the Invention

The present invention will be described below more specifically using embodiments.

(Embodiment 1)

An information recording medium according to an embodiment of the present invention will be described below with reference to the drawings. For the sake of convenience of the description, each of the drawings shows a part of an information recording medium in enlarged relation.

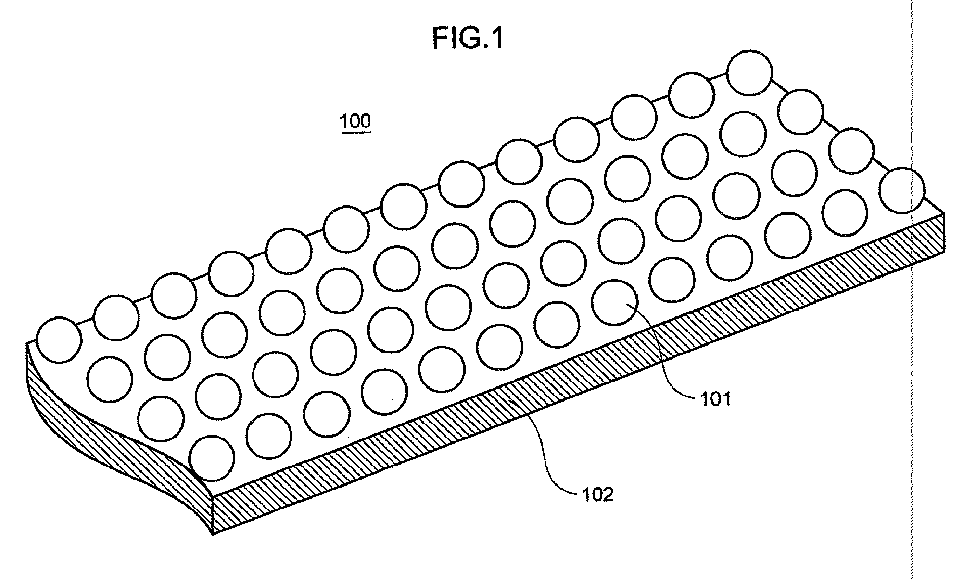

Fig. 1 shows a structural example of an information recording medium 100 according to the present embodiment. As shown in Fig. 1, the information recording medium 100 includes a substrate 102 made of glass, and phase-change fine particles (particle portions) 101 formed in independent relation on the substrate 102.

As will be described later, the information recording medium 100 may also have protective layers which protect the phase-change fine particles 101.

The substrate 102 has a disk shape. As a material for forming the substrate 102, a material having high flatness and high stability when the information recording medium 100 is rotated for recording/reproduction is preferable. In the present embodiment, glass having excellent flatness is used, but the material for forming the substrate 102 is not limited thereto. A metal such as aluminium or a plastic material such as polycarbonate may also be used.

Each of the phase-change fine particles 101 on the substrate 102 is formed to have a size of generally not more than 30 nm in an information recording direction. Here, the information recording direction is a tracking direction for recording information in the information recording medium 100. As a material (information recording material) for each of the phase-change fine particles 101, to increase the speed of writing to the information recording medium 100, a material which increases the speed of crystallization of the phase-change fine particles 101 is preferable. In particular, as the material for the phase-change fine particles 101, (Ge-Sn)Te, GeTe-$Bi_2Te_3$, (Ge-Sn)Te-$Bi_2Te_3$, or Sb-Ge is preferable. In the present embodiment, a material containing GeTe and $Sb_2Te_3$ at a ratio of 22:1 is used as the material for the phase-change fine particles 101, but the material for the phase-change fine particles 101 is not limited thereto. For example, the material for the phase-change fine particles 101 may be a material containing any of GeTe, (Ge-Sn)Te, GeTe-$Sb_2Te_3$, (Ge-Sn)Te-$Sb_2Te_3$, GeTe-$Bi_2Te_3$, (Ge-Sn)Te-$Bi_2Te_3$, GeTe-$(Sb-Bi)_2Te_3$, (Ge-Sn)Te-$(Sb-Bi)_2Te_3$, GeTe-$(Bi-In)_2Te_3$, and (Ge-Sn)Te-$(Bi-In)_2Te_3$ or, alternatively, a material containing any of Sb-Ga, (Sb-Te)-Ga, Sb-Ge, (Sb-Te)-Ge, Sb-In, (Sb-Te)-In, Sb-Mn-Ge, Sb-Sn-Ge, Sb-Mn-Sn-Ge, and (Sb-Te)-Ag-In or the like may also be used.

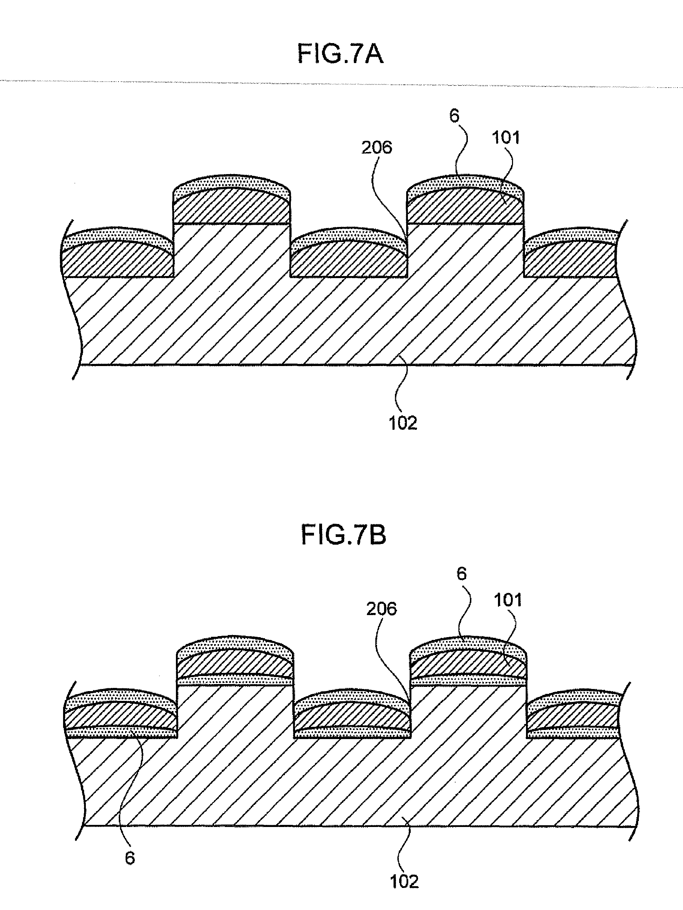

Protective layers 6 for the phase-change fine particles 101 may be formed over the upper portions (on the side opposite to the substrate) of the phase-change fine particles 101 as shown in Fig. 7A, but may also be formed under the lower portions (on the substrate side) of the phase-change fine particles 101. Alternatively, as shown in Fig. 7B, the protective layers 6 may also be formed over and under the phase-change fine particles 101 such that the phase-change fine particles 101 are interposed between the protective layers 6. By thus protecting the phase-change fine particles 101 with the protective layers 6, information can be recorded more stably in the phase-change fine particles 101 or rewritten therein.

As a material for the protective layers 6, a dielectric material is desirable. Examples of the material for the protective layers 6 that can be used include one or a plurality of oxides selected from $TiO_2$, $ZrO_2$, $HfO_2$, ZnO, $Nb_2O_5$, $Ta_2O_5$, $SiO_2$, $SnO_2$, $Al_2O_3$, $BiO_3$, $Cr_2O_3$, $Ga_2O_3$, $In_2O_3$, $SC_2O_3$, $Y_2O_3$, $La_2O_3$, $Gd_2O_3$, $Dy_2O_3$, $Yb_2O_3$, CaO, MgO, $CeO_2$, $TeO_2$, and the like. Examples of the material for the protective layers 6 that can be used may also include one or a plurality of nitrides selected from C-N, Ti-N, Zr-N, Nb-N, Ta-N, Si-N, Ge-N, Cr-N, Al-N, Ge-Si-N, Ge-Cr-N, and the like. Examples of the material for the protective layers 6 that can be used may also include a sulfide such as ZnS, a carbide such as SiC, a fluoride such as $LaF_3$, $CeF_3$, or $MgF_2$, and C. It may also be possible to use one material or a mixture of a plurality of materials each selected from the foregoing materials to form the protective layers.

The thickness of each of the protective layers 6 is preferably not more than 10 nm. If the thickness of the protective layer 6 is set larger than 10 nm, near-field light which will be described later is unlikely to be concentrated on the phase-change fine particles, and recording may be unstable. By setting the thickness of the protective layer 6 to a value of not more than 10 nm, stable recording can be performed. More preferably, the thickness of the protective layer 6 is not more than 5 nm. By setting the thickness of the protective layer 6 to a value of not more than 5 nm, more stable recording can be performed.

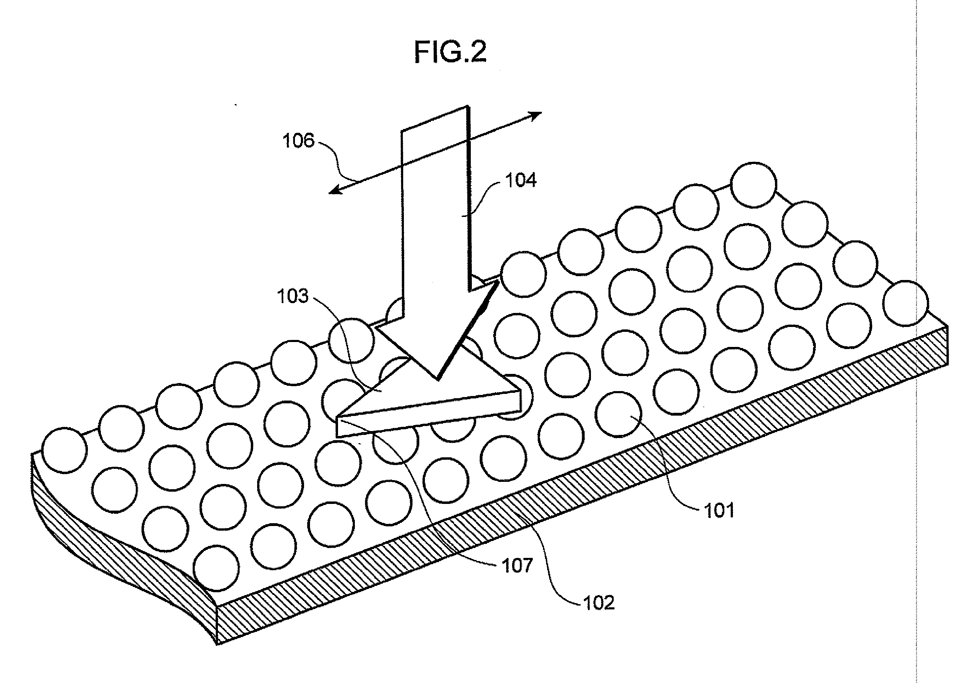

Fig. 2 shows an example of a method for recording information in the information recording medium 100 according to the present embodiment.

As shown in Fig. 2, an antenna 103 made of Au is irradiated with light 104 having a polarization direction 106. In this manner, by plasmon enhancement, intense near-field light is generated on a top 107 of the antenna 103 located in the polarization direction. By the enhanced near-field light, the temperature of each of the phase-change fine particles 101 is increased so that information is recorded in the phase-change fine particles 101. Specifically, the phase-change fine particles 101 are each heated to a temperature of not less than a melting temperature and then rapidly cooled to be amorphized, while being heated to the temperature of not less than the melting temperature and then gradually cooled to be crystallized. By thus using the fact that the phase-change fine particles 101 have different physical properties when they are in an amorphous state and when they are crystallized, information is recorded.

Note that a tracking direction in which the antenna 103 relatively moves with respect to the information recording medium 100 is the information recording direction. In the present embodiment, Au is used as a material for the antenna 103, but the material for the antenna 103 is not limited thereto. It is preferable to select a material which exhibits plasmon resonance with the wavelength of a laser in use in accordance therewith.

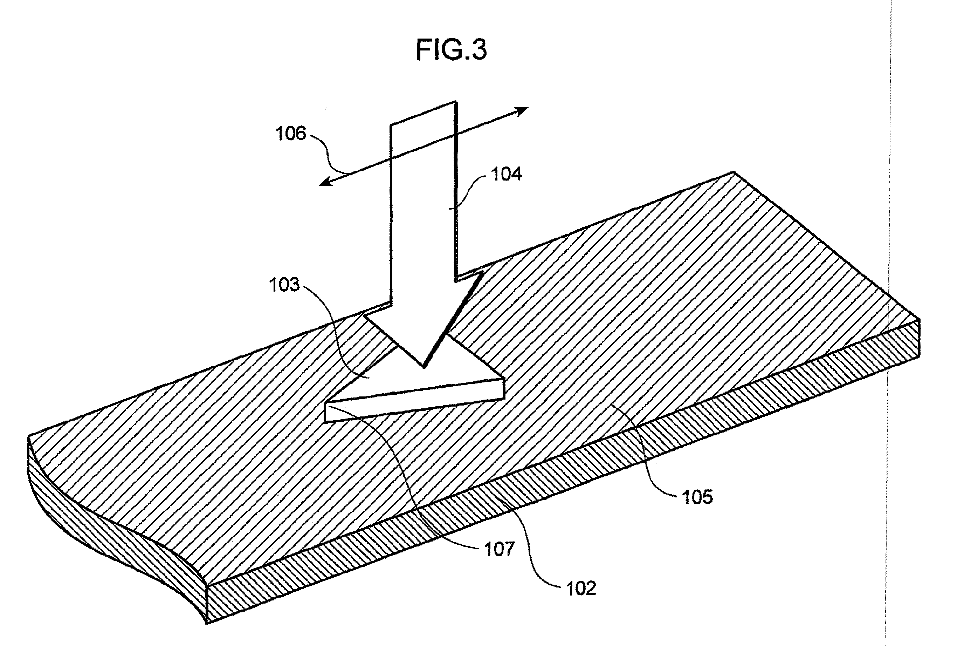

Here, a comparison is made between the case where information was recorded in the isolated phase-change fine particles 101 as shown in Fig. 2 according to the present embodiment and the case where information was recorded in an indiscrete and continuous phase-change thin film 105 as shown in Fig. 3. As shown in Fig. 2, in the case where information was recorded in the phase-change fine particles 101 arranged in mutually isolated relation on the substrate 102, excellent recording using the sizes thereof as minimum units could be performed. On the other hand, in the case where information was recorded in the continuous phase-change thin film 105 as shown in Fig. 3, when the phase-change thin film 105 was heated by near-field light in the crystallization of the phase-change thin film 105, heat was diffused into the phase-change thin film 105. As a result, even when the spot of the near-field light was not more than 30 nm, only large recording marks of not less than 30 nm could be recorded.

Note that, due to the heat diffusion, a size difference begins to appear between the recording marks in the continuous phase-change thin film 105 (Fig. 3) and the recording marks in the phase-change particles 101 (Fig. 2) when the size of the recording mark is not more than 30 nm. Therefore, when information is recorded in a minute region of a size of not more than 30 nm, it is preferable to use the mutually isolated phase-change fine particles 101 each having a size of not more than 30 nm.

It is also known that, by using the phase-change fine particles 101 each having a small size (which is a major radius in the case of an ellipsoid) of not more than 30 nm in the recording direction, the melting temperature of a material used for the phase-change fine particles 101 decreases (see, e.g., Non-Patent Document 1). As a result, recording energy can be reduced.

The size of each of the phase-change fine particles 101 in the recording direction is more preferably set not more than 20 nm. In this case, the surface of each of the phase-change fine particles 101 tends to have a smooth shape so that, when recording is performed using near-field light, the near-field light is likely to be concentrated on the phase-change fine particles 101 to result in easy recording.

However, when each of the phase-change fine particles 101 is reduced to a size of about 3 nm, the number of atoms contained in the phase-change fine particle 101 decreases to excessively reduce the melting temperature. As a result, due to thermal fluctuation, it becomes difficult to stably retain the information recorded in the phase-change fine particle 101. In addition, when the melting temperature of each of the phase-change fine particles 101 is thus low, even if the phase-change fine particle 101 is intended to be crystallized, the phase-change fine particle 101 cannot be gradually cooled any longer so that the very crystallization thereof becomes difficult to result in unstable recording. Therefore, the size of each of the phase-change fine particles 101, is preferably not less than 3 nm.

It could be verified that, as in the present embodiment, even when information was recorded in the phase-change fine particles 101 arranged in mutually isolated relation on the substrate 102, performance achieved by repeated recording which was substantially equal to performance provided by a continuous phase-change thin film such as that of a DVD or Blu-ray disk could be maintained.

While the embodiment of the present invention has been described so far showing examples, the present invention is not limited to the foregoing embodiment, but is applicable to another embodiment based on the technical idea of the present invention.

(Embodiment 2)

Another embodiment of the present invention will be described below with reference to the drawings. Note that the same components as in Embodiment 1 are designated by the same member numbers, and a description thereof is omitted as necessary.

Here, an example of a method for manufacturing an information recording medium according to the present embodiment will be described.

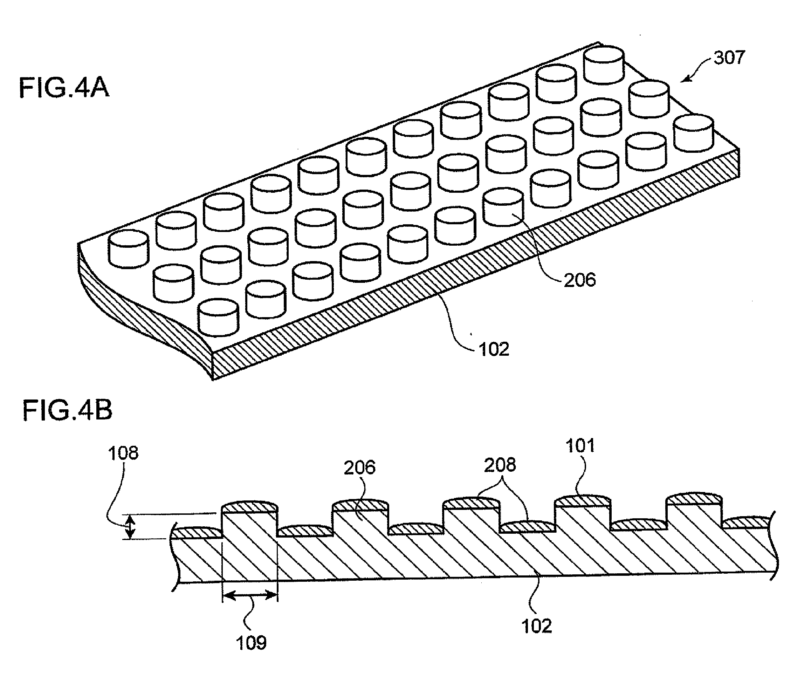

In the present embodiment, in the same manner as in Embodiment 1 described above, the phase-change fine particles 101 are arranged in mutually isolated relation on the substrate 102. As shown in Figs. 4A and 4B, the phase-change fine particles 101 of the present embodiment are formed in mutually isolated relation by forming in advance a pattern 307 formed of a plurality of pillars 206 on the substrate 102, and forming a phase-change recording material (information recording material) 208 on each of the pillars 206 forming the pattern 307.

First, as shown in Fig. 4A, the plurality of cylindrical pillars 206 were formed on the substrate 102. Here, each of the pillars 206 was formed to have a size of about 20 nm in width and about 20 nm in height. At this time, the individual pillars 206 were formed in isolated relation to be kept from contact with each other. After the pattern 307 formed of the plurality of pillars 206 was thus formed on the substrate 102, the phase-change recording material 208 was deposited. In this manner, as shown in Fig. 4B, the phase-change recording materials 208 could be arranged in mutually isolated relation on the substrate 102. The phase-change recording materials 208 thus formed in mutually isolated relation form the phase-change fine particles 101 for recording therein information.

In the present embodiment, the pillars 206 were formed by etching the substrate 102 based on the pattern formed by electron beam lithography. However, a method for forming the pillars 206 is not limited thereto, and the pillars 206 may also be formed by another method. As for recording characteristics, even when they were compared with those obtained with a pattern as shown in Embodiment 1, the recording characteristics were substantially equal.

The shape of each of the pillars 206 formed on the substrate 102 is not limited to a cylindrical shape as shown in Figs. 4A and 4B, either, and may also be a triangular prism shape, a quadrangular prism shape, a spherical shape, a substantially inverted pyramidal shape, or the like.

As described above, it is preferable that the deposited phase-change recording material 208 is in an isolated state. In addition, in terms of increasing the density of recording, it is more preferable that the phase-change recording material 208 (i.e., the phase-change fine particle 101) deposited on each of the pillars 206 is minimized in size to reduce the size of each of the phase-change fine particles 101 and the phase-change fine particles 101 isolated from each other are provided in maximally proximate relation.

In the deposition of the phase-change recording material 208, the phase-change recording material 208 is preferably kept from being formed on each of the side surfaces of the pillars 206. Therefore, it is preferable to apply a deposition method having directionality in the direction of film deposition to increase the likeliness of the deposition of the phase-change recording material 208 on the upper surface of each of the pillars 206 and reduce the likeliness of the deposition of the phase-change recording material 208 on each of the side surfaces of the pillars 206. This allows easy isolation of the phase-change fine particles 101 from each other. Examples of a film deposition method having directionality in the direction of film deposition include sputtering.

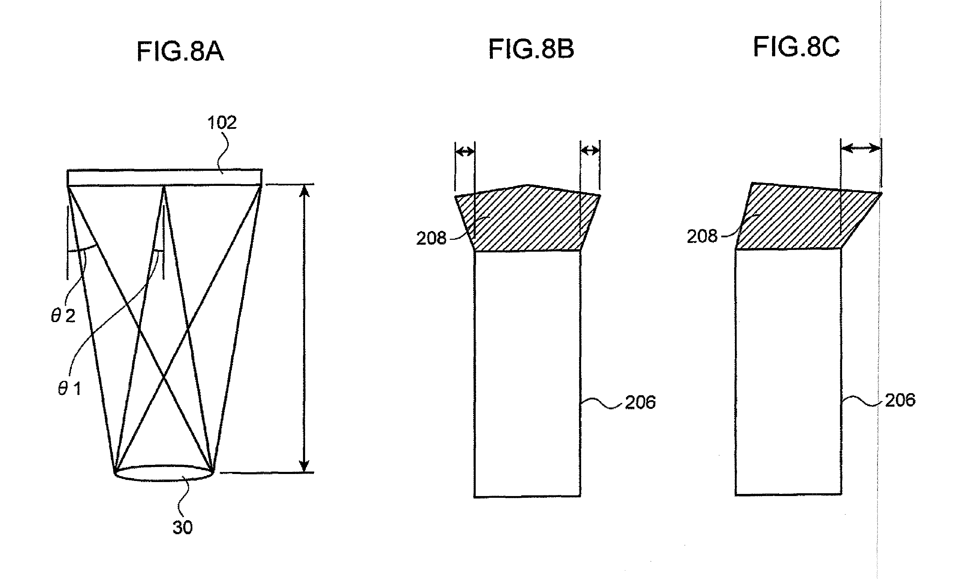

When the phase-change recording material 208 is deposited by sputtering on the upper surface of each of the pillars 206 formed on the substrate 102, as shown in Fig. 8A, a target 30 made of the phase-change recording material 208 is disposed to oppose the substrate 102. At this time, it is desirable to maximize the distance between the target 30 and the substrate 102. With regard to a gas pressure condition in a sputtering device also, it is desirable to minimize a gas pressure. By increasing the distance between the target 30 and the substrate 102 and reducing the gas pressure, sputtered particles fly from the target 30 with excellent directionality (linearity) and reach the upper surface of each of the pillars 206 formed on the substrate 102. As a result, the phase-change recording material 208 is unlikely to be deposited by sputtering on each of the side surfaces of the pillars 206.

As described above, to increase the recording density, it is desirable to provide the individual phase-change fine particles 101 isolated from each other in closest proximity. Accordingly, to increase the recording density, the spacing between the pillars 206 is preferably smaller. However, if the spacing between the pillars 206 is excessively small, the phase-change recording materials 208 formed on the upper surfaces of the individual pillars 206 may come in contact with each other, and the independency of (isolated relation between) the phase-change fine particles 101 may not be able to be ensured. Therefore, in view of these points, it is desirable to design the spacing between the individual pillars 206.

For example, when the phase-change recording material 208 is deposited by sputtering on the upper surface of each of the pillars 206 formed on the substrate 102, it is desirable to properly design the spacing between the pillars 206 in accordance with the linearity of the sputtered particles of the phase-change recording material 208 and the thickness (sputter thickness) of the phase-change recording material 208 formed on each of the pillars 206. The spacing between the individual pillars 206 will be described below by showing the case of Fig. 8A as an example.

As shown in Fig. 8A, when the target 30 made of the phase-change recording material 208 is disposed to oppose the substrate 102 and when the diameter of the target 30 is set to 50.8 mm, the diameter of the substrate 102 is set to 100 mm, and the distance between the target 30 and the substrate 102 is set to 150 mm, sputtered particles that have flown from the end portion of the target 30 reach the substrate 102 at an angle $\theta 1$ of about 9 degrees at the middle portion of the substrate 102. On the other hand, sputtered particles that have flown from the end portion of the target 30 reach the substrate 102 at an angle $\theta 2$ of about 27 degrees at the end portion of the substrate 102. Note that the foregoing angles $\theta 1$ and $\theta 2$ are angles formed between directions perpendicular to the surface of the substrate 102 and the directions in which the sputtered particles have flown. In this case, under the assumption that sputter deposition is achieved by the sputtered particles that have flown from the end portion of the target 30, the following deduction can be reached.

That is, with regard to each of the pillars 206 located at the middle portion of the substrate 102, if the sputter thickness is T and an amount (length) of protrusion of the phase-change recording material 208 from the pillar 206 is L,

$$L = T \times \tan\theta 1$$

is satisfied. Consequently, as shown in Fig. 8B, of the phase-change recording material 208 formed on each of the pillars 206 located at the middle portion of the substrate 102, the portion corresponding to about 15% of the sputter thickness laterally protrudes from the pillar 206. An amount (length) of protrusion from the pillar 206 adjacent thereto is also the same so that, by providing a spacing of a size larger than about 30% of the sputter thickness between the individual pillars 206, it is possible to prevent the phase-change recording materials 208 formed on the upper surfaces of the individual pillars 206 from contact with each other.

On the other hand, with regard to each of the pillars 206 located at the end portion of the substrate 102, if the sputter thickness is T, an amount of protrusion of the phase-change recording material 208 from the pillar 206 is L1, and an amount of recession of the phase-change recording material 208 toward the middle of the pillar 206 is L2,

$$L1 = T \times \sin\theta 2$$

$$L2 = T \times \sin 9.4°$$

are satisfied. Consequently, as shown in Fig. 8C, of the phase-change recording material 208 formed on each of the pillars 206 located on the end portion of the substrate 102, the portion corresponding to about 45% of the sputter thickness laterally protrudes from the pillar 206 on one side thereof and the portion corresponding to about 16% of the sputter thickness is recessed toward the middle of the pillar 206 on the other side thereof. The same holds true for the pillar 206 adjacent thereto so that, by providing a spacing of a size larger than about 29% of the sputter thickness, it is possible to prevent the individual phase-change recording materials 208 formed on the upper surfaces of the pillars 206 from contact with each other on the end portion of the substrate 102. When Figs. 8B and 8C are viewed collectively, the spacing between the individual pillars 206 is preferably set larger than about 30% of the sputter thickness.

Note that, the foregoing description has been given under the assumption that the sputter deposition is achieved by the sputtered particles that have flown from the end portion of the target 30. However, if consideration is given to the fact that the number of the sputtered particles that fly from the end portion of the target 30 is small and the number of the sputtered particles that fly from the middle portion of the target 30 is larger, it is also possible to perform design such that the spacing between the individual pillars 206 is smaller than about 30% of the sputter thickness.

Note that a method for depositing the phase-change recording material 208 is not limited to the sputtering described above, and it is also possible to use, e.g., vapor deposition.

While the embodiment of the present invention has been described so far by showing examples, the present invention is not limited to the foregoing embodiment, but is applicable to another embodiment based on the technical idea of the present invention.

(Embodiment 3)

Still another embodiment of the present embodiment will be described below with reference to the drawings. The same components as in Embodiment 1 are designated by the same member numbers and a description thereof is omitted as necessary.

In the present embodiment, a description will be given mainly to the difference between still another method for manufacturing an information recording medium in which isolated phase-change recording materials are arranged and the manufacturing method of Embodiment 2.

In the present embodiment also, in the same manner as in Embodiment 1 described above, the phase-change fine particles 101 are arranged in mutually isolated relation on the substrate 102. However, in the present embodiment, the phase-change fine particles 101 are formed directly on the flat substrate 102 without using the pillars 206 to manufacture the information recording medium 100.

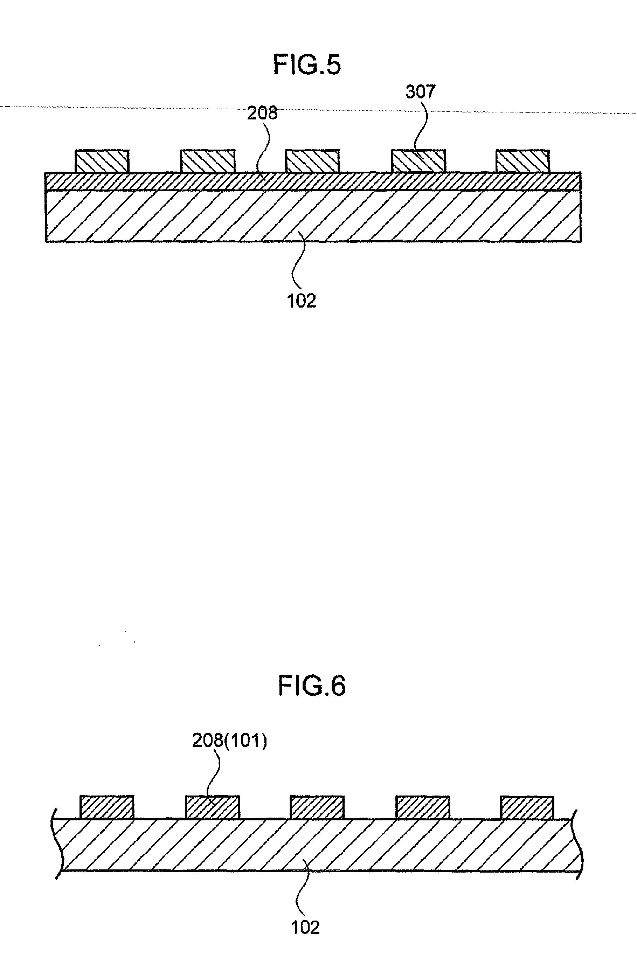

In the method for manufacturing the information recording medium 100 according to the present embodiment, as shown in Fig. 5, the phase-change recording material 208 was uniformly deposited first on the flat substrate 102 by sputtering, vapor deposition, or the like. Then, on the phase-change recording material 208, the desired pattern 307 (mask) is formed.

Specifically, a material for the pattern 307 (mask) was uniformly formed on the phase-change recording material 208, and subjected to pattern lithography using an electron beam and to development. Then, using the pattern 307 as a mask, the phase-change recording material 208 was etched. As a material for forming the mask, there can be used a resist (e.g., ZEP520™ available from Nippon Zeon Co., Ltd.) made of an inorganic material such as, e.g., an oxide of Te, ZnS, or an oxide of a transition metal or a typical organic material for an electron beam. Note that the material for the mask (pattern 307) is selected preferably in consideration of an etching rate ratio to the phase-change material.

Then, after the pattern 307 (mask) was formed, as shown in Fig. 6, the phase-change recording material 208 was etched. Thereafter, by removing the mask, the medium having a desired pattern could be produced in which the isolated phase-change recording materials 208 (phase-change fine particles 101) were arranged. The phase-change recording materials 208 thus formed in mutually isolated relation serve as the phase-change fine particles 101 for recording therein information.

In the present embodiment also, in the same manner as in Embodiment 2, by etching the phase-change recording material 208 using the pattern formed by electron beam lithography as the mask, the phase-change fine particles 101 formed of the independent phase-change recording materials 208 are formed. Note that, in the present embodiment, for the etching of the phase-change recording material 208, Ar and $O_2$ have been used. However, the present embodiment is not limited thereto, and another gas may also be used.

The phase-change recording materials 208 include one which is not large in the etching rate difference with the pattern 307 of the mask, and a case may be considered where the step of directly etching the phase-change recording material 208 is difficult. Therefore, another method for manufacturing the information recording medium 100 by directly forming the phase-change fine particles 101 on the flat substrate 102 without using the pillars 206 will be described below with reference to Figs. 9A to 9D.

As shown in Fig. 9A, first, on the flat substrate 102, an underlying layer 20 made of an easy-to-etch material (such as, e.g., an acrylic resin) was uniformly deposited. Then, over the underlying layer 20, a desired pattern 307 (mask) was formed. Specifically, a material for the pattern 307 (mask) was uniformly formed on the underlying layer 20, and subjected to pattern lithography using an electron beam and to development.

Thereafter, as shown in Fig. 9B, using the pattern 307 as a mask, the underlying layer 20 was etched using oxygen or the like. Thereafter, by removing the mask, the underlying layer 20 having a desired pattern was formed. As a material for forming the mask, there can be used a resist (e.g., ZEP520™ available from Nippon Zeon Co., Ltd.) made of an inorganic material such as, e.g., an oxide of Te, ZnS, or an oxide of a transition metal or a typical organic material for an electron beam. For the underlying layer 20, any easy-to-etch material having a large etching rate difference with the pattern 307 of the mask can be selected, and the etching process can be performed easily.

Thereafter, as shown in Fig. 9C, on the substrate 102 formed with the pattern of the underlying layer 20, the phase-change recording material 208 is deposited by sputtering, vapor deposition, or the like.

Thereafter, as shown in Fig. 9D, by removing the underlying layer 20 together with the phase-change recording material 208 formed on the upper portion of the underlying layer 20, a medium having a desired pattern could be produced in which the isolated phase-change recording materials 208 (phase-change fine particles 101) were arranged. The phase-change recording materials 208 thus formed in mutually isolated relation serve as the phase-change fine particles 101 for recording therein information. Specifically, the substrate 102 in the state of Fig. 9C may be wetted appropriately with a solvent (organic solvent or the like) in which only the underlying layer 20 is dissolved. For example, in the case of using an acrylic resin for the underlying layer 20, the acrylic resin is easily dissolved in an organic solvent and the underlying layer 20 can be removed from the substrate 102.

Note that, in the state of Fig. 9C, the film thickness (height) of the underlying layer 20 is preferably set larger than the film thickness of the phase-change recording material 208. This is because, by doing so, the underlying layer 20 is kept from being completely covered with the phase-change recording material 208, and therefore the solvent comes in contact with the underlying layer 20 when the substrate 102 is immersed in the solvent to allow the underlying layer 20 to be removed with no difficulty.

In accordance with the method for manufacturing the information recording medium described above, the phase-change fine particles 101 each having a size of generally not more than 30 nm in the recording direction can be formed in isolated relation on the substrate 102.

(Embodiment 4)

Yet another embodiment of the present embodiment will be described below with reference to the drawings. The same components as in Embodiment 1 are designated by the same member numbers and a description thereof is omitted as necessary.

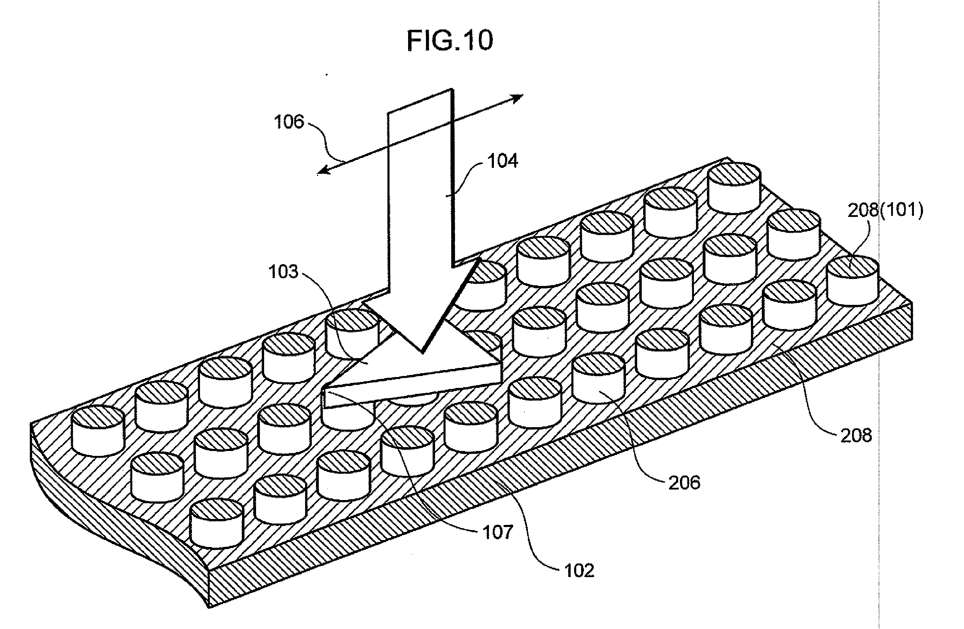

An example of an information recording medium according to the present embodiment is shown in Fig. 10. In the present embodiment also, in the same manner as in Embodiment 2 shown in Figs. 4A and 4B, the pillars 206 are formed on the substrate 102. Then, the phase-change recording material 208 was formed on a pillar formation surface of the substrate 102 by sputtering to manufacture the information recording medium. In the present embodiment, as shown in Fig. 4B, each of the pillars 206 is formed such that the height 108 (length in a direction direct to the surface of the substrate formed with the pillars) thereof is larger than the thickness of the formed phase-change recording material 208. This provides a state where the phase-change recording materials 208 formed on the pillars 206 are isolated into sizes based on the widths (in a cross section in a direction parallel with the surface of the substrate formed with the pillars) of the pillars 206 serving as units, and allows microscopic recording free from thermal diffusion during recording to be performed.

The information recording medium of the present embodiment may also include the protective layers 6 (see Figs. 7A and 7B) for protecting the phase-change fine particles 101 in the same manner as in each of the embodiments described above. However, in this case also, the height of each of the pillars 206 is determined preferably such that the phase-change recording materials 208 are isolated on the pillars 206.

As shown in Fig. 7A, when the protective layers 6 are formed on the side opposite to the substrate 102, the thickness of each of the protective layers 6 is preferably not more than 10 nm. If the thickness of the protective layer 6 is set not less than 10 nm, the near-feld light may be unlikely to be concentrated on the phase-change fine particles 101, as described above, to result in unstable recording. Additionally, by setting the thickness of the protective layer 6 to a value of not more than 5 nm, more stable recording can be performed.

As for a method for recording information in the information recording medium according to the present embodiment, it is the same as in Embodiment 1 described above so that a description thereof is omitted here.

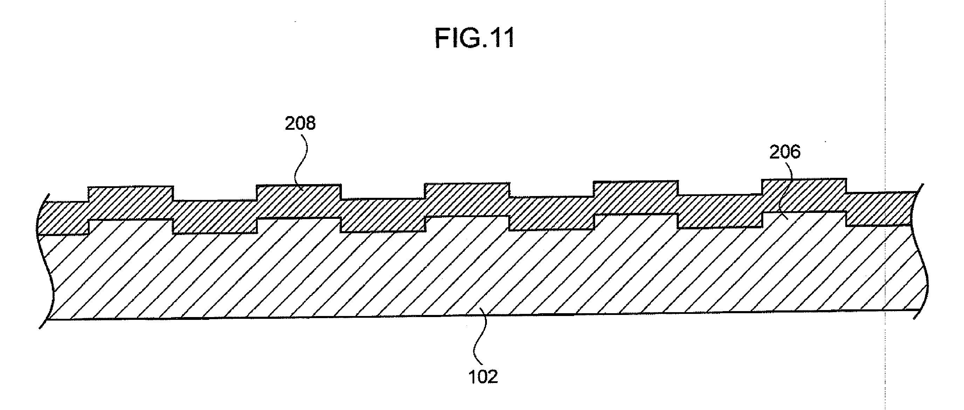

Here, a comparison is made between recording to an information recording medium in which the height 108 of each of the pillars 206 was larger than the thickness of the phase-change recording material 208 and the phase-change recording materials 208 on the pillars 206 were isolated, as shown in Fig. 4B, and recording to an information recording medium in which the height of each of the pillars 206 was smaller than the thickness of the phase-change recording material 208 and the phase-change recording material 208 was not discrete but was continuous, as shown in Fig. 11. In the case of the information recording medium in which the phase-change recording materials 208 were isolated as shown in Fig. 4B, excellent recording using the widths 109 (lengths in the recording direction) of the pillars 206 as minimum units could be performed. However, in the case of the recording medium in which the phase-change recording material 208 was indiscrete and continuous as shown in Fig. 11, during heating using near-field light required upon crystallization of the phase-change recording material 208, heat was diffused in the phase-change recording material 208. As a result, even when the spot of the near-field light was not more than 30 nm, only large recording marks each having a size of more than 30 nm could be recorded. Due to such heat diffusion, a size difference begins to appear between the recording marks when the size of each of the recording marks is not more than 30 nm. In the case of recording in which the size of each of the recording marks is not more than 30 nm, it is preferable to set the width of each of the pillars to a value of not more than 30 nm, set the height of the pillar larger than the thickness of the phase-change recording material, and isolate the phase-change recording materials.

In addition, the width of each of the pillars 206 is preferably not more than 20 nm. As a result, the surface of the phase-change recording material 208 on each of the pillars 206 tends to have a smooth shape and, when information is recorded using near-field light, the near-field light is likely to be concentrated on the phase-change recording material 208 to result in easy recording.

However, when the phase-change recording material 208 is reduced to fine particles each having a size of about 3 nm, the number of atoms contained in each of the particles decreases to excessively reduce the melting temperature, and the retention of recording to the phase-change recording material 208 becomes unstable due to thermal fluctuation. In addition, since the melting temperature is low, even when the particles are intended to be crystallized, the phase-change recording material 208 is unlikely to be gradually cooled so that the crystallization thereof becomes difficult to result in unstable recording. Therefore, the size of the phase-change recording material 208, i.e., the width (length in the recording direction) of each of the pillars 206 is preferably not less than 3 nm.

While the embodiment of the present invention has been described so far by using examples, the present invention is not limited to the foregoing embodiment, and is applicable to another embodiment based on the technical idea of the present invention.

(Embodiment 5)

Still another embodiment of the present embodiment will be described below with reference to the drawings. The same components as in Embodiment 1 are designated by the same member numbers and a description thereof is omitted as necessary.

In the present embodiment, a description will be given mainly to the difference between still another method for manufacturing an information recording medium in which isolated phase-change recording materials are arranged and the manufacturing method of each of the embodiments described above.

In Embodiment 1, on the pillars 206 formed on the substrate 102, the phase-change recording materials 208 are formed and, by setting the height 108 (depth) of each of the pillars 206 larger than the thickness of each of the phase-change recording materials 208, the phase-change recording materials 208 are isolated. In the present embodiment, an example is shown in which the width of the pillar 206 and the thickness of the phase-change recording material 208 are optimized.

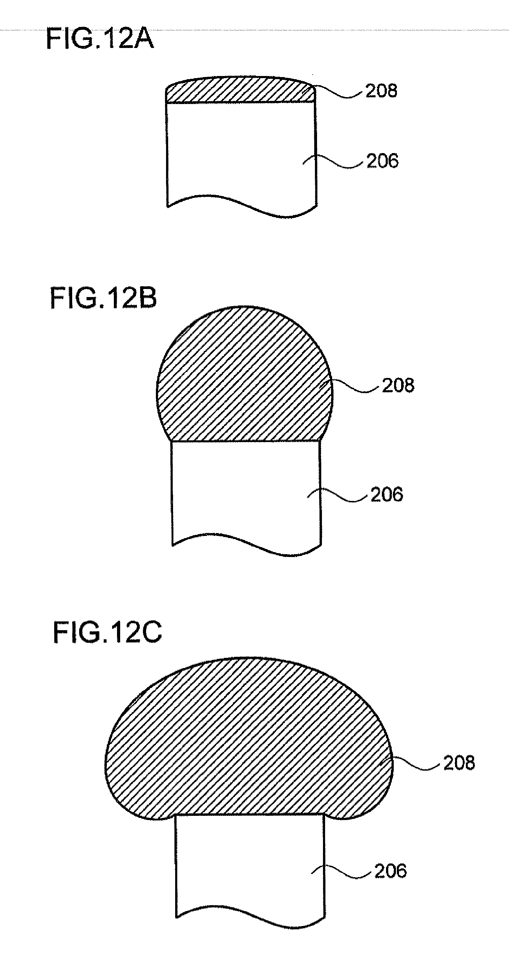

In Figs. 12A to 12C are shown cross-sectional views in which the width (length in the information recording direction) of the pillar 206 is held constant, while the thickness of the phase-change recording material 208 (phase-change fine particle 101) is varied. Each of Figs. 12A to 12C is a conceptual view of the phase-change recording material 208 not immediately after the formation thereof, but after the phase-change recording material 208 is brought into a molten state by an initialization process step and crystallized or after the phase-change recording material 208 is brought into a molten state by recording light. As shown in Fig. 12A, when the thickness of the phase-change recording material 208 is small compared with the width of the pillar 206, even if the phase-change recording material 208 has gone through the molten state, the surface thereof proximate to the antenna 103 for recording (see Fig. 10) is nearly a plan surface. Also, as shown in Fig. 12B, when the width of the pillar 206 is substantially equal to the thickness of the phase-change recording material 208, the phase-change recording material 208 that has gone through the molten state has a nearly spherical shape due to surface tension. Also, as shown in Fig. 12C, when the thickness of the phase-change recording material 208 is larger than the width of the pillar 206, it can be considered that, due to surface tension, the molten phase-change recording material 208 has a shape resulting from its excessive spreading in a lateral direction or its flowing over to the side surfaces of the pillar 206.

As shown in Fig. 10, when recording is performed using near-field light generated by means of plasmon resonance between the antenna 103 and the recording light, if the phase-change recording materials 208 (phase-change fine particles) have pointed portions or undulations, the near-field light is consequently concentrated on a localized area and recording cannot be performed successfully. Therefore, to uniformly increase the temperature of the entire phase-change recording material 208 and perform recording, as shown in Fig. 12B, the phase-change recording material 208 preferably has a nearly spherical shape. Note that, as shown in Fig. 12C, if the phase-change recording material 208 significantly protrudes from the pillar 206 to excessively spread in the lateral direction, a case may be assumed in which the phase-change recording material 208 clings to the phase-change recording material 208 on the adjacent pillar 206 and an isolated state is not achieved or the phase-change recording material 208 adheres to the side surface of the pillar 206 so that heat is diffused.

From the foregoing, in terms of the relationship between the width (width in the information recording direction) of the pillar 206 and the thickness of the phase-change recording material 208, it is preferred to form, on the pillar 206, the phase-change recording material 208 having a thickness of not less than 1/2 of the width of the pillar 206 and not more than double the width of the pillar 206. More preferred is the case shown in Fig. 12B in which the thickness of the phase-change recording material 208 is generally equal to the width of the pillar 206.

Also, as shown in Fig. 12B, when the thickness of the phase-change recording material 208 is generally equal to the width of the pillar 206, by setting the height of the pillar 206 larger than the width of the pillar 206, the phase-change recording material 208 formed on the pillar 206 is brought into an isolated state on the pillar 206. This reduces the isolated phase-change recording material 208 to substantially the same size as the width of the pillar 206 and allows individual and localized heating of the phase-change recording material 208 on the pillar 206. Therefore, it is possible to perform stable information recording free from thermal diffusion to the phase-change recording material 208 and perform high-density recording using the pillars 206 as minimum units.

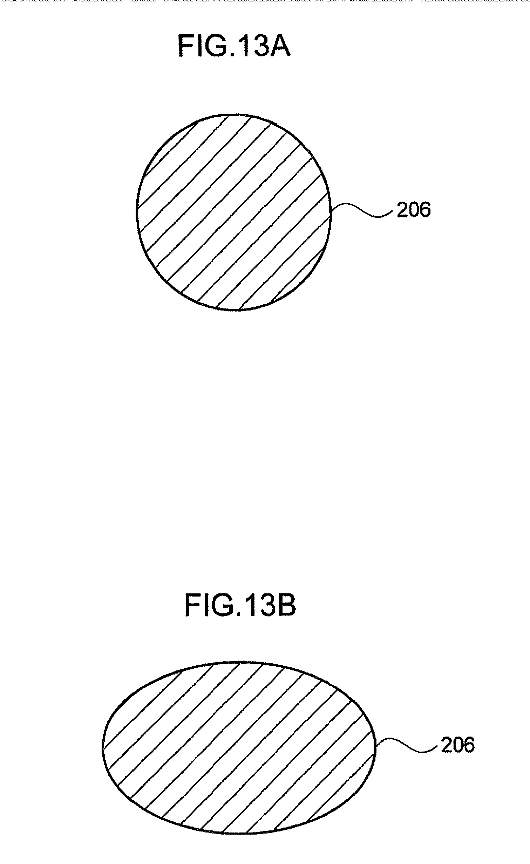

As described above, it is preferable to prevent a pointed portion or undulation from being formed in the phase-change recording material 208. Accordingly, a cross-sectional shape of the pillar 206 along a plane parallel with the substrate 102 is preferably a non-angular circle as shown in Fig. 13A or a non-angular ellipsoid or oval as shown in Fig. 13B. As shown in Fig. 13A or 13B, by using the pillar 206 having a non-angular shape in a cross section in a plane parallel with the substrate 102, when the phase-change recording material 208 is formed over an upper portion of the pillar 206, the non-angular phase-change recording material (having no pointed portion or undulation) 208 can be formed.

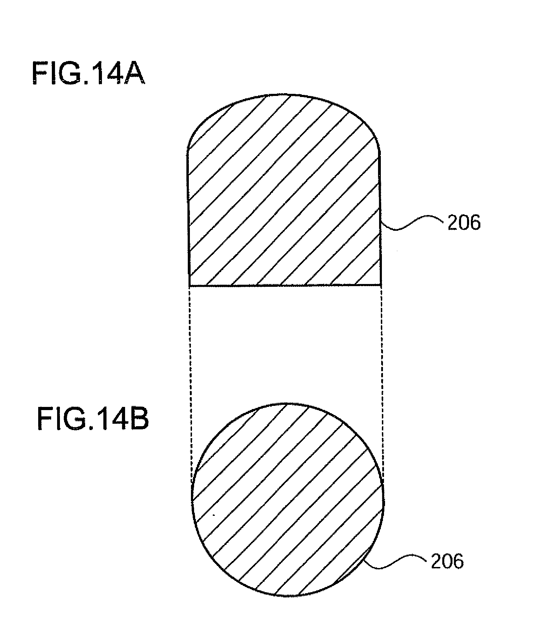

In addition, as shown in Fig. 14, it is desirable to use the pillar 206 having a non-angular shape at a portion thereof where the phase-change recording material 208 is formed.

Fig. 14A shows a cross section of the pillar 206 obtained by cutting the pillar 206 along a plane perpendicular to the substrate 102. On the other hand, Fig. 14B shows a cross section of the pillar 206 obtained by cutting the pillar 206 along a plane parallel with the substrate 102. As a result, when the phase-change recording material 208 is formed on the upper portion of the pillar 206, the phase-change recording material 208 tends to have a nearly spherical non-angular shape, and stable information recording can be performed.

While the embodiment of the present invention has been described so far by using examples, the present invention is not limited to the foregoing embodiment, and is applicable to another embodiment based on the technical idea of the present invention.

(Embodiment 6)

Yet another embodiment of the present embodiment will be described below with reference to the drawings. The same components as in Embodiment 1 are designated by the same member numbers and a description thereof is omitted as necessary.

In the present embodiment, an example is shown in which, in association with the shape of the pillar 206 described above in the foregoing embodiments, stable recording can be achieved.

In the embodiments described above, the description has been given to a configuration in which, by forming the phase-change recording materials 208 on the pillars 206 and isolating the phase-change recording materials 208 on the pillars 206, when the small recording marks each having a size of not more than 30 nm are recorded, stable recording free from thermal diffusion can be performed.

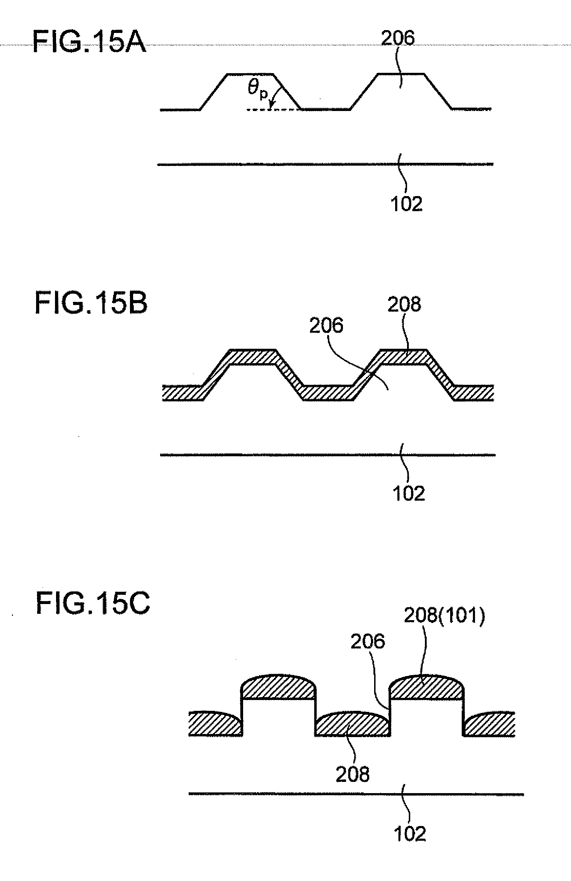

In Embodiments 3 and 4, the depth (height 108), the width 109, and the shape of the pillar 206 have been mainly described but, to isolate the phase-change recording materials 208, the angle $\theta p$ at which each of the pillars 206 is formed is also important. Here, the angle $\theta p$ of the pillar 206 indicates an angle formed between the sidewall portion of the pillar 206 and the main surface of the substrate 102, as shown in Fig. 15A. Examples of the angle $\theta p$ are shown in Figs. 15B and 15C. As shown in Fig. 15B, when the angle $\theta p$ of the pillar 206 is small, the phase-change recording materials 208 formed on the pillars 206 are undesirably integrated with the phase-change recording material 208 directly formed on the substrate 102 irrespective of the depth of each of the pillars 206 and, for the reason described above, small marks cannot be recorded any longer. On the other hand, as shown in Fig. 15C, if the angle $\theta p$ of the pillar 206 is large, the isolated phase-change recording materials 208 can be formed on the pillars 206. To form the isolated phase-change recording materials 208 on the pillars 206,

the angle $\theta p$ of the pillar 206 is preferably not less than 75 degrees. It has been found that, when the angle $\theta p$ of the pillar 206 is not less than 75 degrees, if the depth of each of the pillars 206 is larger than the thickness of each of the phase-change recording materials 208, the phase-change recording materials 208 are isolated on the pillars 206. Note that, more preferably, the angle $\theta g$ of the pillar 206 is not less than 80 degrees. In this case, the phase-change recording materials 208 can be more reliably isolated on the pillars 206.

In each of Embodiments 1 to 6 described above, the example has been shown which uses, as a material capable of recording therein information, the phase-change recording material 208. However, the material capable of recording therein information is not limited thereto. As the material capable of recording therein information, another material capable of thermal recording in which heat causes a change such as the opening of a hole or a composition change, e.g., a pigment may also be used.

Thus, the information recording medium according to an aspect of the present invention includes a substrate, and particle portions arranged in isolated relation on the substrate and each including an information recording material, wherein a width of each of the particle portions in an information recording direction is not more than 30 nm.

In accordance with the arrangement described above, the particle portions are arranged in isolated relation on the substrate. This allows localized heating of each of the particle portions and allows stable recording free from thermal diffusion. In addition, the width of each of the particle portions in the information recording direction is not more than 30 nm, and high-density recording using the particle portions as minimum units can be performed. Therefore, it is possible to obtain a high-reliability and high-density information recording medium.

Note that the length of each of the particle portions in the information recording direction is more preferably not more than 20 nm. In the arrangement, the surface of each of the particle portions tends to have a smooth shape so that, when information is recorded using near-field light or the like, the near-field light is likely to be concentrated on the particle portion to result in easy recording.

It is also desirable that the length of each of the particle portions in the information recording direction is not less than 3 nm. This is because, if the particle portion is reduced to a size of less than 3 nm, the number of atoms contained in the particle portion decreases to reduce the melting temperature of the particle portion so that the crystallization thereof becomes difficult.

The information recording medium according to the aspect of the present invention further includes pillars arranged in isolated relation on the substrate, wherein each of the particle portions is formed of the information recording material formed on each of the pillars, a width of each of the pillars in the information recording direction is not more than 30 nm, and a height of each of the pillars is larger than a thickness of the information recording material.

In accordance with the foregoing arrangement, the height of each of the pillars is larger than the thickness of the information recording material so that the information recording material formed on each of the pillars is reliably brought into an isolated state on the pillar. This allows stable recording free from thermal diffusion, and also allows high-density recording using the pillars as minimum units to be performed. Therefore, it is possible to obtain a high-reliability and high-density information recording medium.

In the information recording medium according to the aspect of the present invention, the thickness of the information recording material is not less than 1/2 of the width of the pillar in the information recording direction and not more than double the width. This provides the information recording material formed on the pillar with a non-angular shape due to surface tension and allows stable information recording. This also prevents the information recording material formed on the pillar from greatly protruding from the pillar and excessively spreading in a lateral direction and allows the information recording material formed on the pillar to easily retain an isolated state on the pillar. Therefore, it is possible to obtain a higher-reliability and higher-density information recording medium.

In an information recording medium according to another aspect of the present invention, the thickness of the information recording material is generally equal to the width of the pillar in the information recording direction. As a result, the information recording material formed on the pillar is reduced to substantially the same size as that of a cross section of the pillar and has a nearly spherical shape on the pillar due to surface tension to allow more stable recording. Therefore, it is possible to obtain a higher-reliability and higher-density information recording medium.

In the information recording medium according to the other aspect of the present invention, the height of the pillar is larger than the width of the pillar in the information recording direction. When the thickness of the information recording material is generally equal to the width of the pillar in the information recording direction, by setting the height of the pillar larger than the width of the pillar in the information recording direction, the information recording material formed on the pillar can be reliably brought into an isolated state on the pillar. Therefore, it is possible to obtain a high-reliability and high-density information recording medium.

The information recording medium according to the other aspect of the present invention is the information recording medium according to any one of claims 2 to 5, wherein an angle formed between a sidewall portion of each of the pillars and a main surface of the substrate is not less than 75 degrees. As a result, the information recording material formed on the pillar can be reliably brought into an isolated state on the pillar. Therefore, it is possible to obtain a high-reliability and high-density information recording medium.

In the information recording medium according to the aspect of the present invention, the width of the pillar in the information recording direction is not more than 20 nm. As a result, the surface of the information recording material formed on the pillar tends to have a smooth shape. Therefore, when information is recorded using near-field light or the like, the near-field light is likely to be concentrated on the particle portion to result in easy recording.

In the information recording medium according to the aspect of the present invention, the width of the pillar in the information recording direction is not less than 3 nm. When the particle portion is reduced to a size of less than 3 nm, the number of atoms contained in the information recording material formed on the pillar decreases to reduce the melting temperature of the particle portion including the information recording material so that the crystallization thereof is difficult. However, the foregoing arrangement can avoid the foregoing situation and allow high-reliability and high-density information recording.

In the information recording medium according to the aspect of the present invention, a cross section of each of the pillars parallel with the main surface of the substrate has a shape enclosed by a non-angular curved surface. This also provides the information recording material formed on the pillar with the shape enclosed by the non-angular curved surface and allows stable information recording with less thermal bias to be performed to the particle portion including the information recording material.

In the information recording medium according to the aspect of the present invention, at least one of an upper portion and a lower portion of each of the particle portions is formed with a protective layer. This achieves the effect of stabilizing the recorded state in the particle portion or improving the recording sensitivity.

In the information recording medium according to the aspect of the present invention, the protective layer is formed of a dielectric material. By thus using the dielectric material for the protective layer, it is possible to easily and reliably perform the protection of the particle portion.

In the information recording medium according to the aspect of the present invention, a thickness of the protective layer is not more than 10 nm. By thus setting the thickness of the protective layer 6 to a value of not more than 10 nm, it is possible to perform stable recording. That is, if the thickness of the protective layer 6 is set larger than 10 nm, during recording, near-field light is unlikely to be concentrated on the particle portion and recording may be unstable. However, the foregoing situation can be avoided and stable recording can be performed.

In the information recording medium according to the aspect of the present invention, the thickness of the protective layer is not more than 5 nm. By thus setting the thickness of the protective layer 6 to a value of not more than 5 nm, during recording, near-field light is likely to be concentrated on the particle portion and more stable recording can be performed.

In the information recording medium according to the aspect of the present invention, each of the particle portions records therein information using near-field light generated by means of plasmon resonance. This allows the high-density information recording medium in which information is recorded using the near-field light generated by means of plasmon resonance to be implemented as a high-reliability structure.

A method for manufacturing the information recording medium according to the aspect of the present invention is a method for manufacturing an information recording medium including a substrate, and particle portions arranged in isolated relation on the substrate and each including an information recording material, a width of each of the particle portions in an information recording direction being not more than 30 nm, the method including: a pillar formation step of arranging, on the substrate, pillars each having a width of not more than 30 nm in the information recording direction into isolated relation; and a deposition step of depositing the information recording material over the substrate formed with the pillars to thereby form, on each of the pillars, the information recording material in an isolated state.

In accordance with the foregoing arrangement, the pillars are formed first in isolated relation on the substrate, and then the information recording material is formed on each of the pillars, whereby the information recording material in the isolated state is formed. Here, since the width of each of the pillars in the information recording direction is set not more than 30 nm, the width of the information recording material (particle portion) on the pillar in the information recording direction can be set not more than 30 nm. As a result, even when the information recording material is uniformly deposited on the substrate by the deposition step using, e.g., sputtering, vapor deposition, or the like, it is possible to easily arrange the isolated information recording materials (particle portions) corresponding to the pattern of the pillars, resulting in easy deposition. Therefore, it is possible to easily manufacture a high-reliability information recording medium capable of achieving high-density recording using the pillars as minimum units.

In the method for manufacturing the information recording medium according to the aspect of the present invention, a height of each of the pillars formed in the pillar formation step is larger than a thickness of the information recording material deposited in the deposition step. By thus forming each of the pillars such that the height thereof is larger than the thickness of the information recording material, the information recording material formed on the pillar can be easily and reliably brought into the isolated state on the pillar.

The method for manufacturing the information recording medium according to the aspect of the present invention is a method for manufacturing an information recording medium including a substrate, and particle portions arranged in isolated relation on the substrate and each including an information recording material, a width of each of the particle portions in an information recording direction being not more than 30 nm, the method including the steps of: depositing the information recording material on the substrate; and forming, on the information recording material, a mask having a pattern having a width of not more than 30 nm in the information recording direction, and etching the information recording material from over the mask to thereby form, on the substrate, the particle portions each having the width of not more than 30 nm in the information recording direction and including the information recording material.

In accordance with the arrangement, first, the information recording material is directly deposited on the substrate. Then, the mask is formed on the information recording material and etching is performed to form the information recording materials in isolated relation on the substrate. Here, since the width of the pattern of the mask in the information recording direction is set not more than 30 nm, it is possible to set the width of each of the information recording materials (particle portions) in the information recording direction to a value of not more than 30 nm. The manufacturing method allows the isolated information recording materials in an arbitrary pattern to be directly arranged on the substrate. Therefore, it is possible to manufacture a high-reliability information recording medium capable of achieving high-density recording.

The method for manufacturing the information recording medium according to the aspect of the present invention is a method for manufacturing an information recording medium including a substrate, and particle portions arranged in isolated relation on the substrate and each including an information recording material, a width of each of the particle portions in an information recording direction being not more than 30 nm, the method including the steps of: depositing an underlying layer on the substrate; forming, on the underlying layer, a mask having a pattern having a width of not more than 30 nm in the information recording direction, and etching the underlying layer from over the mask to thereby form, on the substrate, a pattern of the underlying layer having a width of not more than 30 nm in the information recording direction; depositing the information recording material over the substrate formed with the pattern of the underlying layer; and removing the underlying layer together with the information recording material formed on the underlying layer to thereby form, on the substrate, the particle portions each having the width of not more than 30 nm in the information recording direction and including the information recording material.

In accordance with the foregoing arrangement, the underlying layer is deposited first on the substrate.

Then, the mask is formed on the underlying layer and etching is performed to form, on the substrate, the pattern of the underlying layer having the width of not more than 30 nm in the information recording direction. Here, for the underlying layer, any easy-to-etch material having a large etching rate difference with the mask can be selected, and the etching process can be performed easily. Thereafter, the information recording material is deposited on the substrate formed with the pattern of the underlying layer and, by subsequently removing the underlying layer, the information recording materials are formed in isolated relation. In accordance with the manufacturing method, since the information recording material need not be etched, even an information recording medium using a hard-to-etch information recording material can be easily manufactured. Therefore, it is possible to easily manufacture a high-reliability information recording medium capable of achieving high-density recording.

Note that the specific embodiments or examples given in Best Mode for Carrying Out the Invention are intended only to clarify the technical contents of the present invention. The present invention should not be construed in a narrow sense as being limited to these specific examples, but can be implemented with various modifications within the spirit of the present invention and the scope of the claims.

Industrial Applicability

The information recording medium according to the present invention is useful in implementing an information recording medium using a phase-change recording material and having a significantly improved recording density or the like.

**Claims**

1.  An information recording medium, comprising:

    a substrate; and
    particle portions arranged in isolated relation on the substrate and each including an information recording material, wherein
    a width of each of the particle portions in an information recording direction is not more than 30 nm.

2.  The information recording medium according to claim 1, further comprising:

    pillars arranged in isolated relation on the substrate, wherein
    each of the particle portions is formed of the information recording material formed on each of the pillars,
    a width of each of the pillars in the information recording direction is not more than 30 nm, and a height of each of the pillars is larger than a thickness of the information recording material.

3.  The information recording medium according to claim 2, wherein the thickness of the information recording material is not less than 1/2 of the width of the pillar in the information recording direction and not more than double the width.

4.  The information recording medium according to claim 3, wherein the thickness of the information recording material is generally equal to the width of the pillar in the information recording direction.

5.  The information recording medium according to claim 4, wherein the height of the pillar is larger than the width of the pillar in the information recording direction.

6.  The information recording medium according to any one of claims 2 to 5, wherein an angle formed between a sidewall portion of each of the pillars and a main surface of the substrate is not less than 75 degrees.

7.  The information recording medium according to any one of claims 2 to 6, wherein the width of the pillar in the information recording direction is not more than 20 nm.

8.  The information recording medium according to any one of claims 2 to 7, wherein the width of the pillar in the information recording direction is not less than 3 nm.

9.  The information recording medium according to any one of claims 2 to 8, wherein a cross section of each of the pillars parallel with the main surface of the substrate has a shape enclosed by a non-angular curved surface.

10. The information recording medium according to any one of claims 1 to 9, wherein at least one of an upper portion and a lower portion of each of the particle portions is formed with a protective layer.

11. The information recording medium according to claim 10, wherein the protective layer is formed of a dielectric material.

12. The information recording medium according to claim 10 or 11, wherein a thickness of the protective layer is not more than 10 nm.

13. The information recording medium according to any one of claims 10 to 12, wherein the thickness of the protective layer is not more than 5 nm.

**14.** The information recording medium according to any one of claims 1 to 13, wherein each of the particle portions records therein information using near-field light generated by means of plasmon resonance.

**15.** A method for manufacturing an information recording medium including a substrate, and particle portions arranged in isolated relation on the substrate and each including an information recording material, a width of each of the particle portions in an information recording direction being not more than 30 nm, the method comprising:

a pillar formation step of arranging, on the substrate, pillars each having a width of not more than 30 nm in the information recording direction into isolated relation; and
a deposition step of depositing the information recording material over the substrate formed with the pillars to thereby form, on each of the pillars, the information recording material in an isolated state.

**16.** The method for manufacturing an information recording medium according to claim 15, wherein a height of each of the pillars formed in the pillar formation step is larger than a thickness of the information recording material deposited in the deposition step.

**17.** A method for manufacturing an information recording medium including a substrate, and particle portions arranged in isolated relation on the substrate and each including an information recording material, a width of each of the particle portions in an information recording direction being not more than 30 nm, the method comprising the steps of:

depositing the information recording material on the substrate; and
forming, on the information recording material, a mask having a pattern having a width of not more than 30 nm in the information recording direction, and etching the information recording material from over the mask to thereby form, on the substrate, the particle portions each having the width of not more than 30 nm in the information recording direction and including the information recording material.

**18.** A method for manufacturing an information recording medium including a substrate, and particle portions arranged in isolated relation on the substrate and each including an information recording material, a width of each of the particle portions in an information recording direction being not more than 30 nm, the method comprising the steps of:

depositing an underlying layer on the substrate;
forming, on the underlying layer, a mask having a pattern having a width of not more than 30 nm in the information recording direction, and etching the underlying layer from over the mask to thereby form, on the substrate, a pattern of the underlying layer having a width of not more than 30 nm in the information recording direction;
depositing the information recording material over the substrate formed with the pattern of the underlying layer; and
removing the underlying layer together with the information recording material formed on the underlying layer to thereby form, on the substrate, the particle portions each having the width of not more than 30 nm in the information recording direction and including the information recording material.

FIG.1

EP 2 418 645 A1

FIG.2

# FIG.3

EP 2 418 645 A1

FIG.4A

307

206

102

FIG.4B

108

206

208

101

102

109

EP 2 418 645 A1

# FIG.5

# FIG.6

# FIG.7A

# FIG.7B

FIG.8C

FIG.8B

FIG.8A

## FIG.9A

307

20

102

## FIG.9B

20

102

## FIG.9C

20

208

102

## FIG.9D

208(101)

102

FIG.10

# FIG.11

## FIG.12A

208

206

## FIG.12B

208

206

## FIG.12C

208

206

## FIG.13A

206

## FIG.13B

206

FIG.14A

206

FIG.14B

206

FIG.15A

$\theta_p$

206

102

FIG.15B

206

208

102

FIG.15C

208(101)

206

208

102

| | INTERNATIONAL SEARCH REPORT | International application No. |
|---|---|---|
| | | PCT/JP2010/002474 |

**A. CLASSIFICATION OF SUBJECT MATTER**
*G11B7/24*(2006.01)i, *G11B7/254*(2006.01)i, *G11B7/257*(2006.01)i, *G11B7/26*
(2006.01)i

According to International Patent Classification (IPC) or to both national classification and IPC

**B. FIELDS SEARCHED**

Minimum documentation searched (classification system followed by classification symbols)
G11B7/24, G11B7/254, G11B7/257, G11B7/26

Documentation searched other than minimum documentation to the extent that such documents are included in the fields searched
Jitsuyo Shinan Koho          1922–1996     Jitsuyo Shinan Toroku Koho    1996–2010
Kokai Jitsuyo Shinan Koho    1971–2010     Toroku Jitsuyo Shinan Koho    1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2009/025148 A1  (Konica Minolta Holdings, Inc.),<br>26 February 2009 (26.02.2009),<br>claims; paragraphs [0018] to [0031], [0043] to [0048]; fig. 7, 8, 13<br>(Family: none) | 1,10,11 |
| X<br>Y | WO 2008/084591 A1  (Konica Minolta Opto, Inc.),<br>17 July 2008 (17.07.2008),<br>paragraphs [0028] to [0032], [0045], [0054] to [0058]; fig. 3 to 4<br>& US 2010/0007990 A      & CN 101583998 A | 1-9,15-18<br>12-14 |
| Y | JP 2006-147148 A  (Toshiba Corp.),<br>08 June 2006 (08.06.2006),<br>paragraphs [0023], [0061] to [0062]; fig. 1, 7<br>(Family: none) | 12,13 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 May, 2010 (11.05.10) | 25 May, 2010 (25.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/002474 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2008/056467 A1  (Sharp Corp.),<br>15 May 2008 (15.05.2008),<br>claims; paragraphs [0014] to [0042]<br>(Family: none) | 14 |
| A | JP 2008-192275 A  (Canon Inc.),<br>21 August 2008 (21.08.2008),<br>entire text; all drawings<br>& US 2008/0074786 A1 | 1-18 |
| A | JP 2008-204532 A  (Toshiba Corp.),<br>04 September 2008 (04.09.2008),<br>entire text; all drawings<br>& US 2008/0204935 A1 | 1-18 |
| A | JP 2007-26628 A  (Showa Denko Kabushiki Kaisha),<br>01 February 2007 (01.02.2007),<br>entire text; all drawings<br>(Family: none) | 1-18 |

Form PCT/ISA/210 (continuation of second sheet) (July 2009)

**REFERENCES CITED IN THE DESCRIPTION**

**Patent documents cited in the description**

- JP 2003114184 A
- JP 2584122 B
- JP 3793040 B
- JP 2574325 B

**Non-patent literature cited in the description**

- *Proc. Roy. Soc. Lond. A.,* vol. 318, 231